# EUROPEAN PATENT APPLICATION

(11) **EP 1 677 240 A2**
(43) Date of publication of application: **05.07.2006**
(21) Application number: 05028382.9
(22) Date of filing: 23.12.2005
(51) Int. Cl.: G06Q 10/00

(54) **Support system and program for installing photovoltaic power generator**

(30) Priority: 28.12.2004 JP 2004380935
(71) Applicant: SHARP KABUSHIKI KAISHA, Osaka-shi, Osaka 545-8522 (JP)
(72) Inventor: Nishitani, Jun, Osaka 577-0816 (JP); Inada, Shuji, Osaka-shi Osaka 545-0052 (JP); Hirose, Mitsuru, Chiba 272-0021 (JP); Inada, Hideyuki No. 15B-15-4, Everett Tower,, 50480 Kuala Lumpur (MY)
(74) Representative: Müller - Hoffmann & Partner

(57) **Abstract**

A support system for installing a photovoltaic power generator with photovoltaic modules comprising: calculation means for calculating an installation area of the modules on the basis of geographic information.

## Description

### BACKGROUND OF THE INVENTION

### Field of the Invention

The present invention relates to a support system and program for installing a photovoltaic power generator, which can facilitate estimation of installation cost of the photovoltaic power generator .

### Description of Related Art

In recent years, utilization of various energies has been reconsidered in view of taking measures for global environment such as reduction of CO₂. Particularly, solar cells which utilize solar energy have been expected to be representatives of environment-friendly, clean energy supply sources. In general, photovoltaic power generators are designed to be dispersion-type power supplies which interconnect with a commercial power supply such that electricity is supplied from the commercial power supply of the system in the case where the required electricity consumption can not be covered by only the dispersion-type power supply. Also, in the case where the electricity generated by the solar cells becomes redundant, the photovoltaic power generator can supply electricity to the interconnected commercial power supply, namely it can sell the electricity, which facilitates recovering of installation and maintenance cost of the generator. This has contributed to installation of photovoltaic power generators to the roofs of common houses. Consequently, it is important for customers who possess photovoltaic power generators installed on their houses to efficiently recover the cost and time consumed for installing the photovoltaic power generators and the cost and labor consumed for maintenance of the photovoltaic power generators, in the form of generated electric power. Therefore, it has been necessary to perform diagnostics for determine whether or not the output of the photovoltaic power generator is normal during the installation thereof and, if it is abnormal, it has been necessary to accurately and rapidly perform diagnostics of the cause thereof. For example, there is a diagnosis method performed after installation of a photovoltaic power generator as disclosed in JP-A 2001-326375.

However, potential customers who have not possessed a photovoltaic power generator regard, as important, information about the electric power generation amount of a photovoltaic power generator to be installed, information as to which surface should be used for installation for providing a greatest efficiency in cases where the roof has different shapes and orientations and information about the purchase/installation costs and the like. In order to obtain such information, it has been necessary to perform works of measuring the roof shape, performing estimation of the area thereof, determining the concrete layout and the like of photovoltaic modules and creating the specifications of the photovoltaic power generator. Particularly, potential customers do not necessarily have drawings of their own houses and, therefore, salespersons have been required to visit customer's houses, measure and inspect their roof shapes by climbing on the roofs, suggest specification drafts such as the installation layout and the like and concrete drafts such as the estimated prices and also suggest economic simulations of calculations of the balance between the customer's electric power consumption and electric power generation amount as required for facilitating the customer's motivations for installation for winning contracts. As described above, such conventional methods require visiting customer's houses a number of times at the steps of "proposing", "measurement and inspection", "suggestion of specification drafts, estimation and economic simulations" and "contract". This requires calculating the costs required for such visiting investigations and the like at the actual places, such as personnel costs, as the installation cost for photovoltaic power generators.

Further, depending on the seasons and time slots when salespersons visit customer's houses, they can not easily take account of the influence of shades covering the customer's houses due to the ambient environment, such as reduction of power generation amount, and therefore, they have been required to visit and investigate multiple times prior to suggestion of the economical simulations in some cases. Therefore, in cases where the installations of photovoltaic power generators are not realized after multiple visits and investigations, the personal costs consumed for the investigations put pressure on the profits. This causes salespersons to have feelings of resistance toward making concrete suggestions to new potential customers, thereby disturbing facilitation of installations of photovoltaic power generators. Accordingly, currently, in order to develop new potential customers, salespersons have relied on passive sales responsive to actions from customers who desire photovoltaic power generators, sales using advertising catalogs or phones, visiting sales using pamphlets or holding of events. These visiting sales and holding of events have problems of impossibility of obtaining information about roof shapes of customer's houses and suggesting estimation, which makes impossible to make concrete suggestions appropriate to respective potential customers, thereby resulting in one-sided sales and insufficient motivation to installation of photovoltaic power generators. Therefore, eventually, it is necessary to rely on salespersons' efforts to repeatedly visit potential customers many times, thereby requiring a long time until installation as well as costs.

Namely, the manufacturers of photovoltaic power generators also have desired to easily acquire, prior to installation, concrete data about the electric power generation amount and the installation cost as the photovoltaic power generator installation plan and also suggest such data to potential customers. Consequently, there has been a need for a support system for installing a photovoltaic power generator which enables suggesting concrete drafts and giving sufficient explanation to potential customers without performing on-site inspections, causes customers to have motivations and secure feeling for installation and enables facilitation of installation of photovoltaic power generators. Further, there has been no simple and effective information correcting means for potential customers who do not know actual prices such as the installation costs and actual power generation amount and thus require a long time for determining the purchase of photovoltaic power generators while having awareness about photovoltaic generation. Therefore, there has been a need for such a support system for installing a photovoltaic power generator.

### SUMMARY OF THE INVENTION

The present invention has been made in view of the aforementioned circumstances and aims to provide a support system for installing a photovoltaic power generator which enables performing estimation of installation cost for a photovoltaic power generator without performing on-site inspection for a roof shape.

A support system for installing a photovoltaic power generator according to the present invention has photovoltaic modules, and includes calculation means for calculating an installation area of the modules of the photovoltaic power generator on the basis of geographic information.

More specifically, a support system for installing a photovoltaic power generator with photovoltaic modules may include the followings;
1) specification means for specifying a state (in other words, a condition or conditions) of the modules' installation on the basis of geographic information, and
2) estimation means for estimating an installation cost of the photovoltaic power generator from the state specified by the specification means.

More specifically, a support system for installing a photovoltaic power generator with photovoltaic modules may include the followings;
1) a geographic image database storing geographic images and coordinates,
2) installation site input means for receiving an input about an installation site of the modules,
3) geographic image display means for displaying a geographic image, including the input installation site, on display means by reading the geographic image from the geographic image database on the basis of position information of the input installation site,
4) installation surface input means for receiving inputs for specifying an installation surface of the modules, on the displayed geographic image,
5) installation surface shape specification means for specifying an installation surface shape by extracting coordinates of the installation surface from the geographic image database,
6) module determination means for determining a type and layout of the modules suitable (preferably, optimal) for the installation surface shape, and
7) estimation means for reading prices of the modules used in the layout, from a price database storing prices of the modules, and calculating an estimated price of an installation cost of the photovoltaic power generator.

According to the present invention, there is provided a system for calculating a size of an installation area for a photovoltaic power generator based on geographic information. More specifically, there is provided a system including specification means for specifying a state of the modules' installation on the basis of geographic information, and estimation means for estimating an installation cost of the photovoltaic power generator from the state specified by the specification means. More specifically, there is provided a system in which, when the installation surface is specified on the geographic image displayed on the display means, the shape of the installation surface is specified, the layout and the like of the modules suitable for the shape is determined, and the estimated price of the installation cost of the photovoltaic power generator is calculated. Accordingly, with this invention, it will be possible to eliminate labors such as actual visit to customers and measuring the roof shape of the customer's house, thereby to provide estimation extremely quickly and easily.

### BRIEF DESCRIPTION OF THE DRAWINGS

The present invention will become more fully understood from the detailed description given hereinbelow and the accompanying drawings which are given by way of illustration only, and thus are not limitative of the present invention and wherein:
Fig. 1 illustrates a method for acquiring geographic images including three-dimensional coordinates according to the present invention;
Fig. 2 is a perspective view illustrating an exemplary installation of a photovoltaic power generator according to a first example of the present invention;
Fig. 3 is a block diagram of a support system for installing a photovoltaic power generator according to the first example of the present invention;
Fig. 4 illustrates an exemplary input screen of a support system for installing a photovoltaic power generator according to the first example of the present invention;
Fig. 5 illustrates a synthesized image illustrating an exemplary installation of a photovoltaic power generator, according to the first example of the present invention;
Fig. 6 illustrates an exemplary output screen of the support system for installing a photovoltaic power generator according to the first example of the present invention;
Fig. 7 is a block diagram of a support system for installing a photovoltaic power generator according to a second example of the present invention;
Fig. 8 illustrates an exemplary email guidance screen of a support system for installing a photovoltaic power generator according to the second example of the present invention;
Fig. 9 is a block diagram of a support system for installing a photovoltaic power generator according to a third example of the present invention; and
Fig. 10 is a block diagram of a support system for installing a photovoltaic power generator according to a fourth example of the present invention.

### DESCRIPTION OF THE PREFERRED EMBODIMENTS

A support system for installing a photovoltaic power generator according to the present invention may be implemented in various embodiments as follows.

### 1. Support System For Installing Photovoltaic Power Generator

The system according to the present invention may be structured using a computer. The system according to the present invention includes various types of means (an installation site input means, an installation surface shape specification means and the like) and various types of databases (a geographic image database, a price database and the like). These components may be realized by a single computer or plural computers. These plural computers may be separated from one another or connected to one another through telecommunication lines (LANs, Internet and the like) for enabling data transmission and reception thereamong.

The system according to the present invention realizes a support system for installing a photovoltaic power generator including a calculation means for calculating an installation area of photovoltaic modules of a photovoltaic power generator, on the basis of geographic information.

More specifically, the system according to the present invention is a support system for installing a photovoltaic power generator including an specification means for specifying a state of the photovoltaic power generator's installation of a customer on the basis of geographic information provided by the customer, and an estimation means for estimating the installation cost or the price of the solar photovoltaic power generator from the state specified by the specification means.

The system according to the present invention may be realized by installing, into a computer, a program which enables the computer to function as the aforementioned databases and means. Such a program, preferably being recorded in a computer readable medium, is also included in the scope of the present invention.

### 2. Geographic Image Database

The geographic image database stores geographic images and coordinates. The coordinates are associated with the geographic images. The geographic images are aggregates of pixel image elements arranged on grids stored in a format based on, for example, BMP, JPEG or TIFF. The geographic image database stores high resolution geographic images. The geographic image database may store two or more types of geographic images with different resolutions since it is preferable that lower resolution geographic information is displayed on a screen by properly reducing the resolution according to the necessity of image recognition, in order to reduce the loads of the display means and data transmission means. In this case, lower resolution geographic images generally include wider areas. Such images include the installation site of a photovoltaic power generator and are used for recognizing, on the display screen, the house or the like which is the installation site. Also, such images may indicate installation surfaces for which estimation has been already performed.

This enables recognizing the distribution of installation surfaces for which salespersons have performed estimation, for example. By recognizing such a distribution, it is possible to recognize areas where photovoltaic power generators have been actively introduced and undeveloped areas, which is useful for sales and urban planning. Geographic images with a higher resolution (the higher resolution out of the two resolutions) are used, for example, for specifying an accurate installation surface shape.

The coordinates of geographic images may be two dimensional and, more preferably, three dimensional. In this case, it is possible to specify three-dimensional installation surface shapes, which enables performing estimation with higher accuracy. Such geographic images including three-dimensional coordinates can be acquired from plural aerial photographs or satellite photographs taken at different photographing angles. Also, the geographic image database may store sets of plural two-dimensional geographic images taken at different photographing angles, and three-dimensional coordinate data may be determined as needed by creating stereoscopic images from the sets of two-dimensional geographic images.

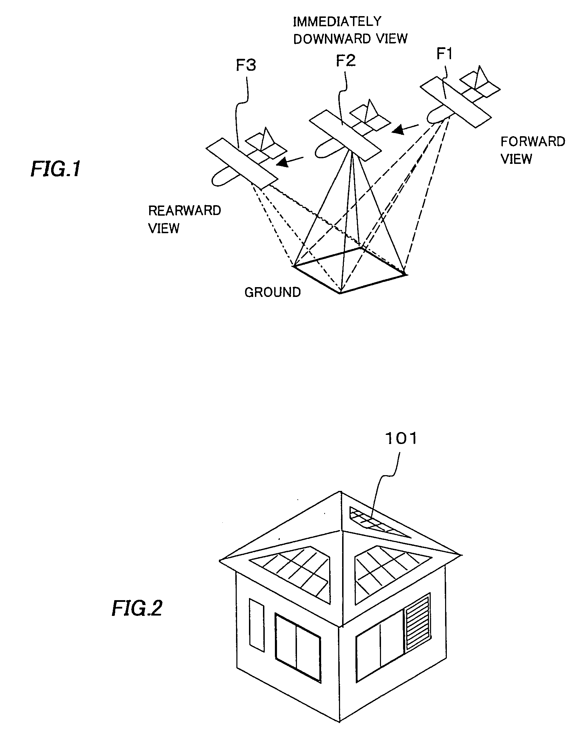

Hereinafter, geographic images including three-dimensional coordinates will be described in more detail. The respective image elements of such geographic images include, for example, a (X, Y) positional coordinate as a horizontal-coordinate system and a Z coordinate in the heightwise direction (the three-dimensional coordinate is not limited to a coordinate based on three axes which are orthogonal to one another and may be a coordinate based on three non-orthogonal axes or an angular coordinate system (which indicates a certain point in a space with the distance from an origin and the angle with respect to a reference axis). The three-dimensional coordinate is acquired by photographing aerial photographs of a ground in three directions which are a diagonally forward view direction, an immediately upward view direction and a diagonally rearward view direction from an aircraft, as illustrated in Fig. 1, and by calculating the height on the basis of the photographing angles during photographing and the images. At this time, in order to enable specifying the installation surface shape from geographic images, precise aerial photographs with a pixel size of about 10 cm, for example, are employed.

The aforementioned photographing angles may be defined by the attitude rotational angles of a sensor on the image pickup device, namely the rotational angle about X, Y and Z rotation axes. From these three rotational variables, the photographing angles can be determined. Further, on the basis of plural sets of photographing angles and images, stereoscopic images can be created and the height can be calculated on the basis of the respective pixel image elements. Preferably, each of the image elements of images taken in an immediately upward direction is provided with a three-dimensional coordinate.

Further, images having three-dimensional coordinates, which have the aforementioned photographing angles, are subjected to Ortho Geometric corrections along with the coordinates therein to be geometric images with high accuracy in terms of direction and shape, and the geometric images can be compared with existing map data. Preferably, these geometric images are stored in a server so that plural users can concurrently refer to them.

Also, a geographic coordinate system may be employed as the horizontal coordinate system used in the present invention. For example, the equator is defined as a latitude of 0°, 90° is defined as the North Pole, -90° is defined as the South Pole while the longitude passing through the old Royal Greenwich Observatory in the U.K. is defined as a longitude of 0°, the east of the old Royal Greenwich Observatory is defined as positive values up to 180° and the west of the old Royal Greenwich Observatory is defined as negative values up to -180°. Also, it is possible to employ a combination of an absolute coordinate and a relative coordinate for each image element. Also, as a relative coordinate system, it is possible to employ a two-axis coordinate system having an origin at the left lower corner of an image and corresponding to the number of grids, for example. In this case, it is necessary to designate, on images, absolute longitude and latitude data, in addition to information indicating that the origin is at the left lower corner of the image.

### 3. Installation Site Input Means

The installation site input means receives inputs about installation sites of photovoltaic modules. The "installation site" refers to a site where an installation surface exists, wherein the prefecture name and the city name, as well as the address including the block number, are also included therein. As a method for inputting thereto, there are a method for inputting the address in a text box provided on a screen, a method for selecting an area from plural candidate areas and a method for clicking, using a mouse, on links having area names written thereon. It is also possible to utilize a method for accessing the installation site input means from a portable terminal equipped with a position detection means such as the GPS and inputting a current position of the portable terminal. In this case, the current position is designated by the longitude and the latitude, thereby enabling specifying the installation site with higher accuracy than the case of using the address.

### 4. Geographic Image Display Means

The geographic image display means reads a geographic image including the input installation site, from the geometric image database, and displays it on a display means (a display or the like). For example, when a prefecture name or a city name is input as an installation site, the geographic image display means can display a geographic image of the entire prefecture or the entire city. Also, when an address is input as an installation site, the geographic image display means can display the area within 1 km around the address (the range of display may be either determined in advance or determined in inputting the installation site). The resolution of the displayed geographic image is not limited and may be properly selected in accordance with the range of display and the like. Also, the geographic image display means may be configured such that it displays a geographic image with a higher resolution when a portion of the displayed geographic image is selected. The displayed geographic image is only required to have a resolution which can at least provide information necessary for specification of the installation site and determination of the installation surface shape.

### 5. Installation Surface Input Means

The installation surface input means receives inputs for specifying installation surfaces of the modules on a displayed geographic image. For example, by inputting plural points forming the vertexes of a polygon, the polygon can be created and an installation surface can be specified from the polygon. The inputting of the vertexes of a polygon can be performed by clicking on plural points of a geographic image or inputting coordinates in text boxes. The shapes of installation surfaces are not limited and may be round shapes or semi-round shapes. The inputting for specifying installation surfaces may be performed with various methods which enable specification of the installation surface. The number of installation surfaces to be specified therein may be one or more. For example, when a roof is constituted by four surfaces oriented in different directions (see Fig. 2), it is possible to specify the respective surfaces and obtain information as to which surface should be used for installing a photovoltaic power generator thereon for providing a largest efficiency. Also, in the case of houses with several roofs, it is possible to specify the several roofs, for example, in order to estimate the power generation amount and the installation cost of when photovoltaic power generators are installed on all the roofs.

Further, the term "installation surfaces" includes grounds (vacant grounds, banks and hillsides and the like), as well as the roofs of buildings.

The system according to the present invention may further include an installation surface database storing installation surface information which has been previously input. In this case, the geographic image display means reads previously input installation surface information, from the installation surface database, and superimposes it on a geographic image. Further, the previously input installation surface information includes information as to which of estimation, order acceptance and failure of order acceptance has been already done for the installation surfaces, and the geographic image display means can display as to which of estimation, order acceptance or failure of order acceptance has been done for the installation surfaces such that they can be distinguished (for example, with different colors). With the aforementioned structure, it is possible to visually recognize the degree of proliferation of photovoltaic power generators in the displayed area and, therefore, the system according to the present invention can be used as a marketing tool.

### 6. Installation Surface Shape Specification means

The installation surface shape specification means specifies the shapes of installation surfaces by extracting the coordinates of the installation surfaces from the geographic image database. As a general rule, when a geographic image includes two-dimensional coordinates, the installation surface shape specification means specifies the two-dimensional shapes of the installation surfaces while when the geographic image includes three-dimensional coordinates, it specifies the three-dimensional shapes of the installation surfaces. However, when the system further includes an installation surface tilt input means for receiving inputs about the tilts of installation surfaces (or an input about the tilt of an installation surface), the installation surface shape specification means can specify the three-dimensional shapes of installation surfaces, from the input tilts and the coordinates of the installation surfaces extracted from the geographic image database. In this case, the coordinates may be two dimensional. Further, when the system includes an installation surface tilt database which designates the relationship between manufacturer names or model names of installation surfaces and the tilts of the installation surfaces and further includes an installation surface information input means for receiving inputs about the manufacturer names or the model names of installation surfaces, the installation surface shape specification means can read the tilts of installation surfaces, as their specifications, in accordance with the input manufacturer names or model names, from the installation surface tilt database and can determine the three-dimensional shapes of the installation surfaces, from the read tilts of installation surfaces and the coordinates of the installation surfaces extracted from the geographic image database. Customers may know the manufacturers of roofs even when they do not know the concrete shapes of the roofs and, in such cases, the three-dimensional shapes of the installation surfaces can be easily specified. The shapes of installation surfaces can be specified using polygons constituted by lines. As the technique for creating such polygons, well known techniques may be utilized.

By determining the three-dimensional shapes of installation surfaces, it is possible to determine the lengths of the edge lines of installation surfaces with higher accuracy, thereby enabling determining the shapes of the installation surfaces with higher accuracy.

Further, in the case where the geographic image database includes two or more types of geographic images with different resolutions, it is preferable that the installation surface shape specification means extracts the coordinates of installation surfaces from geographic images with a higher resolution, even when the geographic image display means displays a geographic image with a lower resolution. This is because, in this case, the shapes of installation surfaces can be specified with higher accuracy.

Preferably, the specified shapes of the installation surfaces are stored in the installation surface shape database. The shapes of installation surfaces stored in this database can be used by a module determination means or an estimation means, for example, when these means does over module determination or estimation.

### 7. Module Determination Means

The module determination means determines the type and the layout of the modules suitable for the shape of the installation surface specified by the installation surface shape specification means. The module determination means may directly receive the output from the installation surface shape specification means or may further include an installation surface shape input means for receiving inputs about the shape of the installation surface, and the module determination means determines the type and the layout of the modules suitable for the shape of the installation surface. For example, a computer, an operator, a user or a customer inputs the output of the installation surface shape specification means to the installation surface shape input means.

As the method for determining the type and the layout of the modules, for example, there are two possible embodiments.

In the first embodiment, the system according to the present invention further includes a module information database storing shapes of the modules, and the module determination means calculates a largest area capable of mounting the modules thereon from the shape of the installation surface and determines the type of the modules and the layout of the modules from the aforementioned area and the shapes of modules read from the aforementioned database. The module information database stores various module types with different shapes (trapezoidal shapes, rectangular shapes, square shapes and the like) or different sizes. The module determination means selects suitable modules from the database and places them on the aforementioned calculated largest area. The selection and the placement of modules may be performed by various methods and, for example, may be performed such that the area on which modules are not placed becomes smallest. Further, the calculation of "the largest area" may be performed by detecting the edge of the installation surface shape and setting the area within a predetermined distance (for example, 30 cm) from the edge to an uninstallable area. Once the type and the layout of the modules are determined, it is possible to determine mounting structures required for installation, necessary parts such as cables, and a power conditioner constituted by an electric power conversion device and the like.

In the second embodiment, the system according to the present invention further includes a placement pattern database storing plural placement patterns of the modules, and the module determination means makes a comparison between the respective placement patterns in the placement pattern database and the aforementioned specified installation surface shape and selects a placement pattern suitable for the installation surface shape to determine the layout. The placement pattern database stores various types of placement patterns in association with installation area contours (shapes and sizes). In this case, the module determination means determines the contour of the installation surface shape, makes comparisons between the determined contour and the respective installation area contours in the database and selects a candidate having an installation area closest thereto. Further, similarly to in examples shown below, it is possible to determine mounting structures required for installation, necessary parts such as cables, and a power conditioner constituted by an electric power conversion device and the like.

The module determination means may further include means for suggesting plural candidates for the selection and the placement of modules and a module selection means for receiving an input for a candidate selected from the suggested candidates. In this case, a computer, an operator, a user, a customer or the like can select modules arbitrarily from plural candidates and may cause a computer to perform the calculation of estimation.

Also, the system according to the present invention may include a module input means for receiving inputs about the type and the layout of the modules suitable for the shape of the installation surface shape, instead of the module determination means. In this case, instead of determining the type and layout of the modules by a computer, for example, a computer, an operator, a user, a customer or the like can select, from a list, a type and a layout of the modules adaptable to the installation surface shape and causes a computer to perform the calculation of estimation.

Preferably, the module determination means may optimize the type and layout of the modules such that the value of the prospective power generation amount divided by the estimated price gets higher. The optimization can be performed by increasing or decreasing the number of the modules one by one, calculating the aforementioned divided value for each of the cases and then making comparisons among the respective divided values.

### 8. Estimation Means

The estimation means reads the prices of the modules used in the aforementioned layout, from a price database storing the prices of the modules, and calculates the estimated price of the installation of a photovoltaic power generator. The estimation means may either calculate the estimated price after the determination of the layout or calculate the estimated price in parallel with the placement of the modules for the determination of the layout (for example, the first embodiment of the module determination means). In the latter case, for example, each time a single module is placed, the price of the module is added to the total price to calculate the estimated price.

Further, in the case where the system according to the present invention further includes an upper limit price input means for receiving an input about the upper limit of the installation price, the estimation means may make a comparison between the aforementioned upper limit price and the estimated price from the estimation means, and the module determination means may change the type and the layout of the modules, on the basis of the result of comparison. The changing of the type and layout of the modules is, for example, changing the modules to more inexpensive ones, reducing the number of the modules and the like. This enables performing estimation such that the aforementioned upper limit price is not exceeded.

The estimation means may estimate the installation cost and the transport cost, as well as the prices of the modules. For example, in cases where the modules are installed at a site distant from an air port or a port, the estimation means can add, to the estimated price, the cost for transporting them from the air port or port to the installation site or surface. For calculating transport costs, the system according to the present invention may further include a distance calculation means for calculating the distance from an airport or a port to the installation site or surface and a transport cost database storing transfer costs for respective areas and respective transporting methods. The position of an airport or port may be input to a starting position input means which receives an input about such a position. Further, the transporting method may be properly selected on condition that priority is given to the time or the cost.

Further, it is preferable that the aforementioned price database and the transport cost database are structured such that their contents can be changed depending on various situations.

### 9. Power Generation Amount Prediction Means

The system according to the present invention may further include a power generation amount prediction means for calculating the prospective power generation amount. In order to realize this, the system according to the present invention may further include a module information database storing specifications about power generation performance (the rated electric power and the like) of the modules and a solar information database storing the positions of the sun and the solar irradiation (in other words, solar irradiation amount(s)) in association with dates and hours and latitudes and longitudes, and the power generation amount prediction means may be configured to calculate the prospective power generation amount, from the aforementioned specifications, the positions of the sun, the solar irradiation and the aforementioned three-dimensional installation surface shape. Since the three-dimensional installation surface shape includes information about the orientation of the installation surface, it is possible to easily and simply determine the prospective power generation amount, by knowing the positions of the sun and the solar irradiation in association with dates and hours and latitudes and longitudes.

Further, in order to calculate the prospective power generation amount with higher accuracy, the system according to the present invention may further include an ambient environment shape specification means for specifying a three-dimensional ambient environment shape by extracting three-dimensional coordinates of the ambient environment of the aforementioned installation surface from the geometric image database, and the power generation amount prediction means may calculate the prospective power generation amount in consideration of the generation of shades due to the aforementioned ambient environment shape. Since the power generation amount is reduced by the generation amount of shades, it is possible to calculate the prospective power generation amount with further accuracy, by taking account of the influence of the ambient environment which may cause shades on the installation surface. It is preferable to consider the generation of shades due to buildings scheduled for construction. Therefore, the system according to the present invention may further include a scheduled building database storing the coordinates of buildings scheduled for construction, the ambient environment shape specification means may further specify the three-dimensional scheduled building shape by extracting the three-dimensional coordinates of buildings scheduled for construction around the installation surface, from the scheduled building database, and the power generation amount prediction means may be configured to calculate the prospective power generation amount in consideration of the generation of shades due to the aforementioned ambient environment shape and the aforementioned scheduled building shape. The scheduled building database may be either separately provided or incorporated in the geometric image database.

The system according to the present invention may further include a desired power generation amount input means for receiving an input about a desired power generation amount, the power generation amount prediction means may make a comparison between the desired power generation amount and the prospective power generation amount, and the module determination means may change the type and layout of the modules on the basis of the result of comparison. For example, when the prospective power generation amount is significantly greater than the desired power generation amount, the number of the modules can be reduced, while when the prospective power generation amount does not reach the desired power generation amount, the number of the modules can be increased, in order to determine the type and layout of the modules appropriate to the desired power generation amount.

### 10. Payback Time Optimization Means

The system according to the present invention preferably further includes an optimization means for optimizing the type and the layout of the modules such that the payback time is decreased. Therefore, the system according to the present invention may be configured to include an electricity price database storing the purchase price of electricity (for example, the purchase price of a unit amount of electricity) or an electricity price input means for receiving an input about the purchase price of electricity, an electricity usage input means for receiving an input about the electricity usage, a payback time calculation means for calculating the reduction of the electricity charge due to the installation of a photovoltaic power generator, from the difference between the prospective power generation amount and the electricity usage and the purchase price of electricity, making a comparison between the reduction and the estimated price (or dividing the estimated price by the reduction) to calculate the payback time of the photovoltaic power generator, and a payback time optimization means for repeating a process of changing the type and layout of the modules and calculating the payback time to optimize the type and layout of the modules such that the payback time is reduced. The "inputting of the electricity usage" may be performed by inputting the amount of electricity or the electricity charge (the amount of electricity and the electricity charge can be inter-converted through the purchase price of electricity). The aforementioned structure enables calculating the time period required for recovering the installation cost for the system according to the present invention by saving the electricity charge with the installed system according to the present invention and also enables optimizing the type and the layout of the modules such that the aforementioned time period is reduced. The optimization can be performed by reducing the number of the modules one by one, calculating the payback times for the respective cases and making comparisons among the payback times of the respective cases.

The aforementioned structure is made in consideration of only the purchased electricity and is not made in consideration of profits derived from selling surplus electricity to electric power utility companies. By taking account of such profits, it is possible to optimize the type and the layout of the modules with higher accuracy. In order to attain this, the electricity price database may further store the selling price of electricity or the electricity price input means may further receive an input about the purchase price of electricity, the payback time calculation means may calculate the reduction of the electricity charge due to the installation of a photovoltaic power generator, from the difference between the prospective power generation amount and the electricity usage and the selling price and the purchase price of electricity, make a comparison between the reduction and the estimated price to calculate the payback time of the photovoltaic power generator.
The aforementioned database storing the selling price and the purchase price of electricity may be incorporated in the computer of the system itself. Also, it is possible to employ a database presented by an electric power utility company, as such a database. Also, it is preferable to specify the electric power utility company which contracts with the customer from the address of the installation site input from the installation site input means and access an electricity purchase/ selling price database presented by this electric power utility company.

### 11. Image Synthesis Means

The system according to the present invention may further include an image synthesis means for superimposing the aforementioned layout on a proper position of a geometric image or on the installation surface shape to create a synthesized image. This enables recognizing the installation pattern within the geographic image or within the installation surface shape, thereby enabling clarifying the image after installation.

### 12. Installation Support Information Database

The system according to the present invention may further include an installation support information database storing installation support information consisting of at least one of an installation price, a prospective power generation amount and a synthesized image and may further include a data transmission means for transmitting installation support information stored in the installation support information database to customers and a browse means which enables browsing of the data.
The aforementioned method enables easily offering, to customers and the like, the results obtained by the system according to the present invention. Customers may be allowed to access customer data within the installation support information database on a customer-by-customer basis or may be allowed to access only a part of the content thereof. For example, customers may be allowed to access layouts synthesized with installation surfaces while not being allowed to access layouts synthesized with geographic images. Also, the data transmission means may notify a method for accessing the installation support information database, instead of transmitting installation support information.

When customers are allowed to access the database, it is preferable to perform customer authentication. In order to perform this, the system according to the present invention may be configured to further include a customer identification database storing customer IDs and passwords, a password input means for receiving inputs of passwords corresponding to customer IDs and a customer authentication means for performing customer authentication by making a comparison between input passwords and data in the customer identification database. The customer identification database may further store information which has been previously input by customers (addresses, installation cost upper limits, required electric powers and the like), information about past estimations and transactions and the like. The various types of means which have been previously described may be enabled to access this database and, for example, the module determination means may determine the suitable type and layout of the modules by referring to the past information about customers.

### 13. Others

The contents of past estimations (prices, layouts, regions and whether or not the contract was made) may be stored in a database so that they can be used for various statistical processes. The results of such statistical processes may be taken into account in, for example, determining estimated prices.

### (First Example)

There will be described an example of a support system for installing a photovoltaic power generator according to the present invention. The present example is mainly on the assumption that a photovoltaic power generator 101 is installed on the roof of a house as illustrated in Fig. 2. The photovoltaic power generator 101 is constituted by plural photovoltaic modules which are connected in series to one another, for example, and the direct current electric power extracted from the device is converted into an alternating-current electric power by a power conditioner device equipped with an inverter circuit. The alternating-current electric power is intended for home use. The shortfall of electricity is covered by electricity purchased from an electric power utility company through a utility power supply while the surplus of electricity is sold to the electric power utility company.

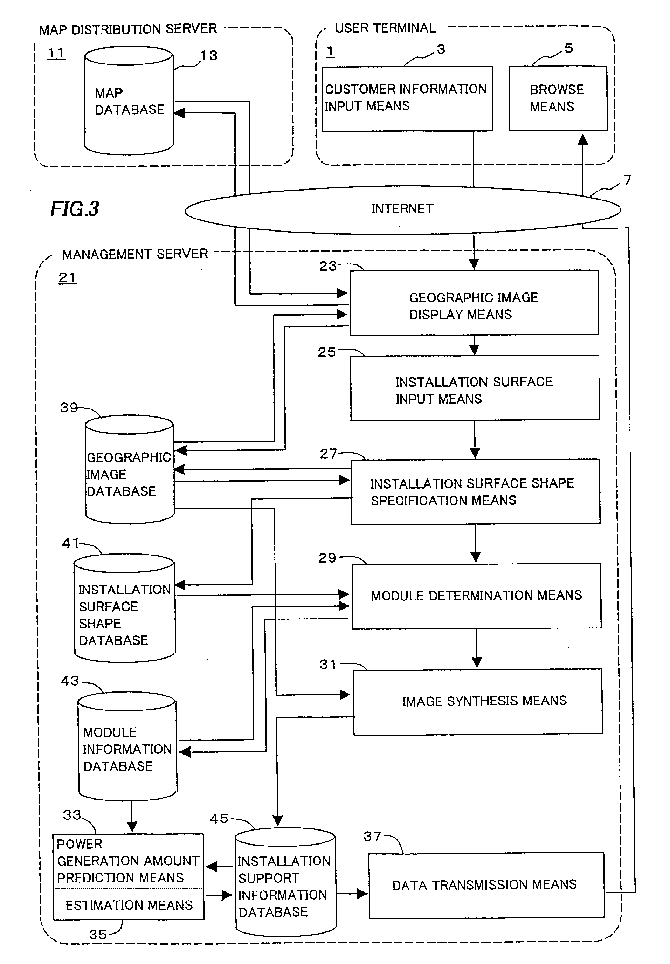

Fig. 3 illustrates a block diagram of the installation support system according to the present example, wherein arrows indicate data flows. The system according to the present example includes a user terminal 1, a map distribution server 11 and a management server 21, which are interconnected through the Internet 7. The user terminal 1 includes a customer information input means 3 and a browse means 5 and the map distribution server 11 includes a map database 13. The management server 21 includes a geographic image display means 23, an installation surface input means 25, an installation surface shape specification means 27, a module determination means 29, an image synthesis means 31, a power generation amount prediction means 33, an estimation means 35, a data transmission means 37, a geographic image database 39, an installation surface shape database 41, a module information database 43 and an installation support information database 45.

Hereinafter, there will be described the flow until a customer receives estimation using this system.

### 1. Inputting of customer information

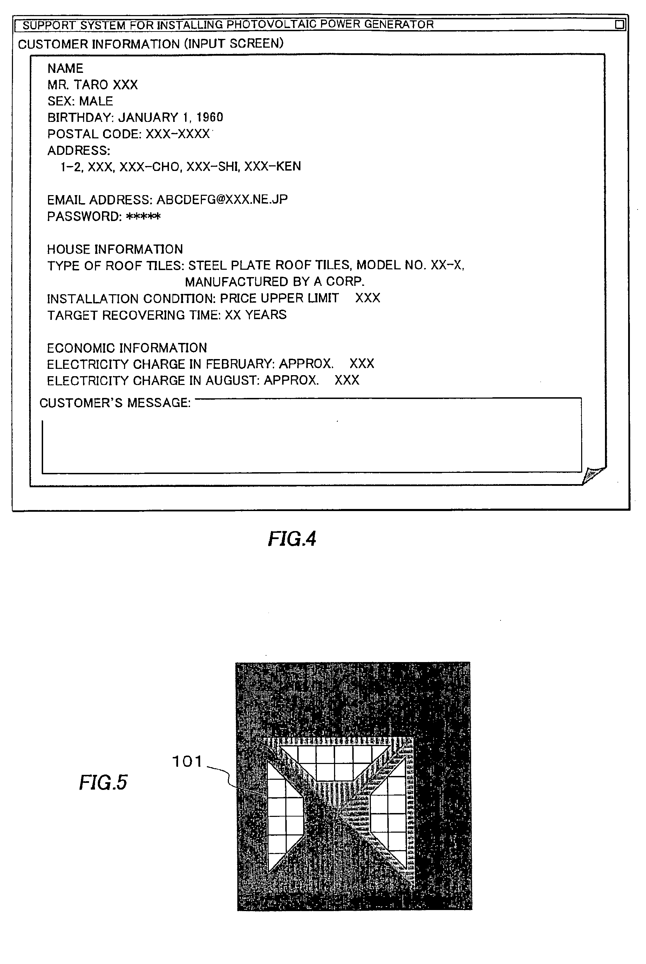

A customer who requests estimation of a photovoltaic power generator accesses a home page of the support system for installing a photovoltaic power generator according to the present invention and inputs customer information thereto in accordance with a customer information inputting screen as illustrated in Fig. 4, for example, by using the customer information input means 3 such as a keyboard of the user terminal 1 constituted by, for example, a stationary-type personal computer. For example, he or she inputs the customer's name, gender, birth date, postal code, address, email address, password, house information such as the type of roof tiles, the upper limit of installation cost, a target time for recovering the installation/maintenance cost (in other words, a target payback time), and economic information such as a monthly electricity charge in, for example, February during which a greatest amount of electric power is consumed by heaters and a monthly electricity charge of, for example, August during which a greatest amount of electric power is consumed by air conditioners. By using the input email address, it is possible to send, to a stationary terminal or a portable terminal, an access code for accessing the installation support information.

Further, there is provided a memo field which enables inputting questions and the like. As other inputting entries, there may be provided inputting entries for house makers or model names for enabling fine adjustment and correction of image data, since roof tilt data may be determined from the house maker or the model name. Once the customer completes required inputs, he or she clicks an inputting button to transmit the data to the management server 21 through the Internet 7.

Further, the customer information input means 3 includes "the installation site input means", "the password input means", "the upper limit price input means", "the electricity usage input means", and "the installation surface information input means" which have been described in the aforementioned preferred embodiment and the respective means can receive inputs about information described in the right stage of Table. 1.

**Table 1**

| **Name in the aforementioned preferred embodiment** | **Information** |
|---|---|
| Installation site input means | Customer's address |
| Password input means | Password |
| Upper limit price input means | Upper limit of installation cost |
| Electricity usage input means | Electricity charge |
| Installment surface information input means | House maker or model name |

### 2. Specification of Customer's House

The geographic image display means 23 in the management server 21 extracts the customer's address from the received data and transmits the address to the map distribution server 11. The map distribution server 11 reads a map including the house corresponding to the customer's address from the map database 13 and transmits it to the geographic image display means 23. The geographic image display means 23 reads a geographic image including the house corresponding to the customer's address, from the geographic image database 39. Next, the geographic image display means 23 displays the read map and geographic image on a display (display means) connected to the management server 21. Further, details have been previously described in "2. Geographic Image Database", "4. Geographic Image Display Means" in the aforementioned preferred embodiment.

Next, a computer, an operator, a user, the customer or the like specifies the customer's house by referring to the map and the geographic image. In cases where plural houses exist at the same block number, it is possible to make an inquiry or a notification to the customer using an email or a WEB screen or it is also possible to execute data processing for the plural houses and cause the user or the customer to select his/her house during browsing the installation support information. In the present example, for the sake of convenience, the description will be proceeded on the assumption that the house has been specified within the address.

### 3. Specification of Roof of Customer's House

Next, a computer, an operator, a user, the customer or the like specifies the roof of the aforementioned house, by using the installation surface input means 25 which is, for example, a mouse. This specification may be performed by enclosing, with a polygon, the portion corresponding to the roof on a geographic image displayed on the display (the specification of the polygon may be performed by clicking the respective vertexes thereof by the mouse or the like). Details have been previously described in the paragraph of "5. Installation Surface Input Means" in the aforementioned preferred embodiment.

Also, this specification may be performed by causing a computer to automatically extract peculiar points such as the edges of the roof or the joint portions of ridges through image processing.

### 4. Specification of Roof Shape

Next, the installation surface shape specification means 27 reads the three dimensional coordinates about the specified roof from the geographic image database 39 and specifies the three-dimensional roof shape by creating a polygon. The specified three-dimensional roof shape is stored in the installation surface shape database 41. The details have been previously described in the paragraph of "6. Installation Surface Shape Specification Means" in the aforementioned preferred embodiment.

### 5. Determination of Type and Layout of the Modules

The aforementioned three-dimensional roof shape is transmitted to the module determination means 29. The module determination means 29 determines the type and layout of the modules appropriate to the installation conditions within the roof shape, by using module information data acquired from the module information database (storing information about shapes of the modules, rated outputs and prices and the like) 43 in the management server 21. At this time, the installation conditions are, for example, the upper limit of the installation cost required for the initial investment and the target time for restoring the installation/maintenance cost based on the generated-electricity-to-money conversion. Further, since some photovoltaic modules can not be installed depending on the type of roof material, it is preferable that the data input to the customer information input means is utilized for the determination. The details have been previously described in the paragraphs of "7. Module Determination Means" and "10. Payback Time Optimization Means" in the aforementioned preferred embodiment.

### 6. Image Synthesis

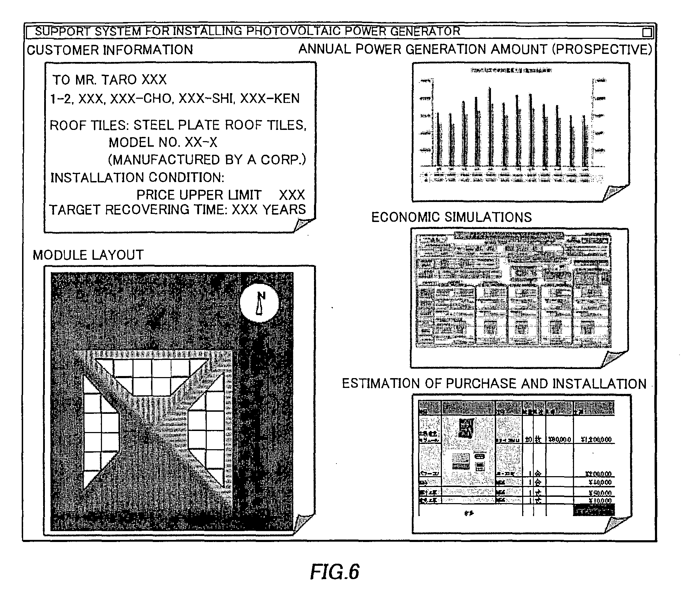

The data about the aforementioned determined layout is transmitted to the image synthesis means 31, and the image synthesis means 31 superimposes the aforementioned determined layout on the aforementioned geographic image to create a synthesized image. Fig. 5 illustrates an exemplary synthesized image. Further, the details have been previously described in the paragraph of "11. Image Synthesis Means" in the aforementioned preferred embodiment.

### 7. Storage in Installation Support Information Database, Prediction of Power Generation Amount and Estimation of Installation Cost

The aforementioned type and layout of the modules and the aforementioned created synthesized image are stored in the installation support information database 45. The power generation amount prediction means 33 extracts module power generation data in the module information database 43 and the layout including latitude and longitude information in the installation support information database 45 and predicts the annual power generation amount and the like. The estimation means 35 extracts module price data in the module information database 43 and the layout including roof material information and the like in the installation support information database 45 and calculates the estimated price such as the installation cost and the maintenance cost. Further, economic simulations may be executed by referring to the customer's electricity usage during the respective months. The various data created as aforementioned is stored as installation support information in the installation support information database 45 on the basis of customer by customer. Further, details have been previously described in the paragraphs of "8. Estimation Means", "9. Power Generation Amount Prediction Means" and "12. Installation Support Information Database" in the aforementioned preferred embodiment.

### 8. Data Transmission

The installation support information is transmitted to the user terminal 1 through the data transmission means 37, and the browse means 5 in the user terminal 1 displays it. Fig. 6 is an installation support information output screen displayed by the browse means 5. In addition to the customer's information, there is displayed a module layout image which is a realistically synthesized geographic information image which has been subjected to rotation processing such that, for example, the upper part is oriented in the north direction. There are also displayed the annual power generation amount (prospective), economical simulations and the purchase/installation estimation and the like and, when the image is clicked, it is enlarged, thereby offering detailed explanation to the customer. Further, the browse means may be realized by printing information through a printer or mailing it from a system manager at a later date.

### (Second Example)

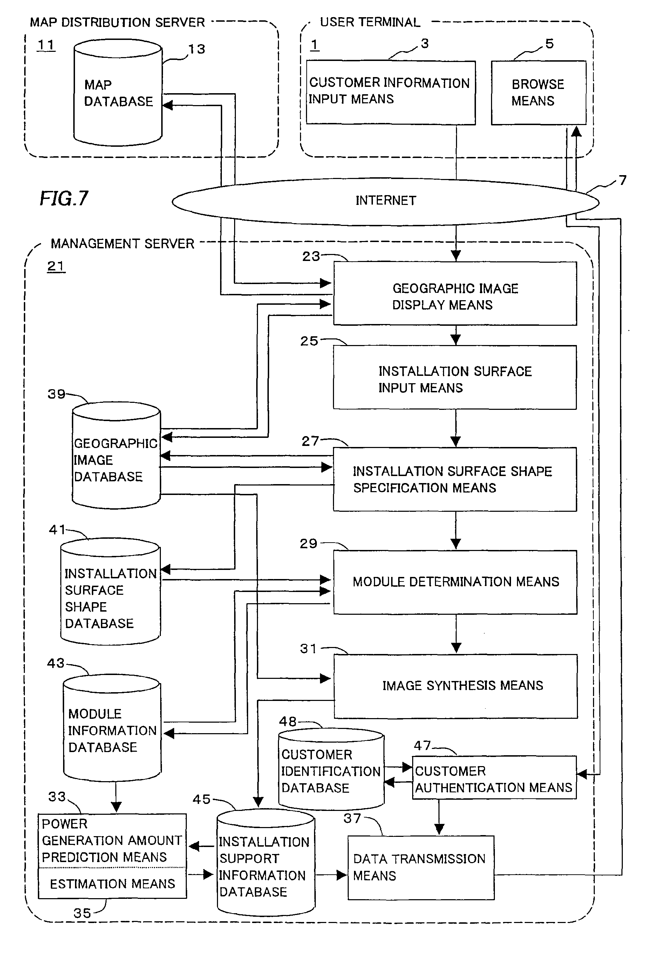

Fig. 7 is a block diagram of a support system for installing a photovoltaic power generator according to a second example, wherein arrows indicate data flows.

The present example is different from the first example in that the system additionally includes a customer authentication means 47 and a customer identification database 48.

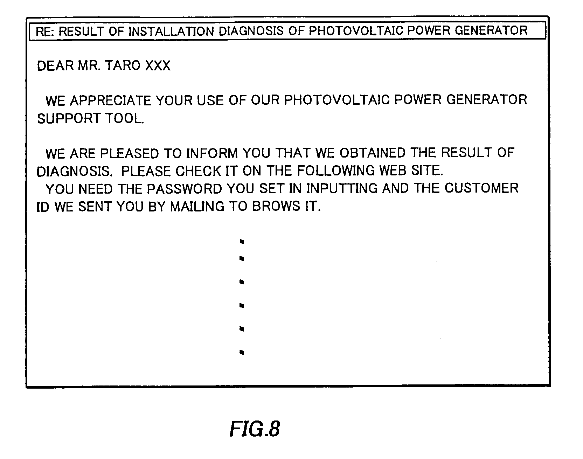

In the present example, the data transmission means 37 transmits an email indicating the completion of estimation and the like (with a statement as illustrated in Fig. 8, for example) to the user terminal 1. When the customer browses the installation support information with the browse means 5 of the user terminal 1, user authentication is performed. The customer information input means 3 in the present example includes customer ID/password input means. Input information is transmitted to the customer authentication means 47. The customer authentication means 47 accesses the customer identification database 48 in the management server 21 and makes a comparison between customer IDs and passwords in the database and the customer ID and the password input by the customer to perform customer authentication. When the customer authentication is succeeded, the customer authentication means 47 gives the data transmission means 37 permission to transmit the installation support information to the customer. On receiving the permission, the data transmission means 37 transmits the installation support information to the customer.

For example, the customer resistors his/her name, address and the like through Web and holds a customer ID code and a password while a system manager manages them. For example, the customer may resistor a password thereto while the system manager may issue a customer ID code and send it to the house by postal mailing, in order to bidirectionally ensure the security for his/her personal information.

### (Third Example)

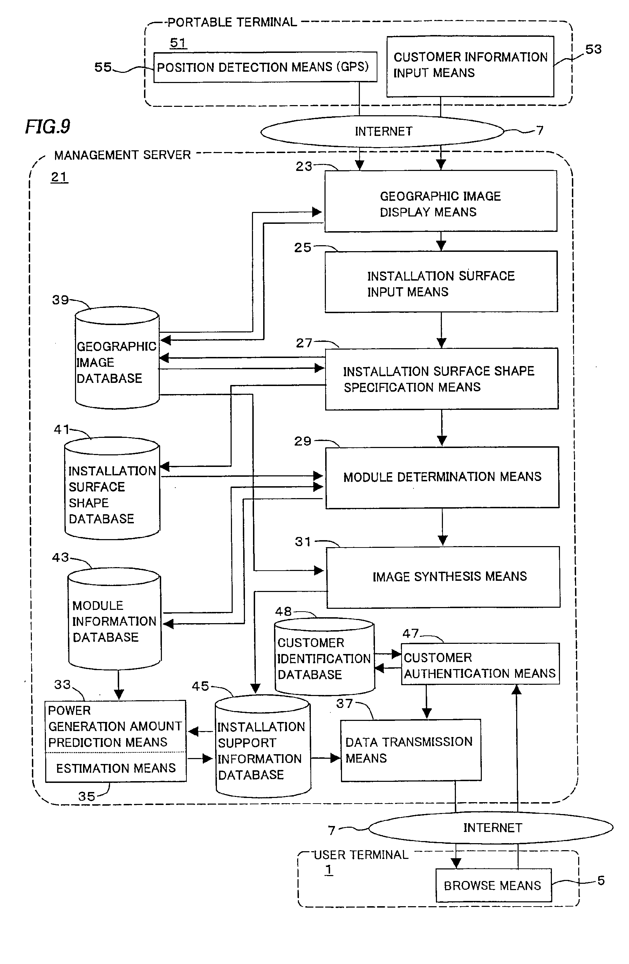

Fig. 9 is a block diagram of a support system for installing a photovoltaic power generator according to a third example, wherein arrows represent data flows.

The present example is different from the second example in that a customer information input means 53 included in a portable terminal 53 is employed for inputting customer information while the map distribution server is not employed. Further, the portable terminal 51 includes a position detection means (GPS) 55. When the customer information is transmitted to the management server 21 through the Internet, the current position (the latitude and longitude) detected by the GPS 55 can be transmitted thereto. In this case, it is preferable that the current position is transmitted from the customer's house. For example, when the current position detected by GPS is separated from the input address by 5 meters or more, it is determined that the transmission from the portable terminal was performed outside the house and the input address is preferentially utilized. In the case where the GPS function and the address information are both employed as described above, it is preferable that a map including the customer's house is read from the map database 13 in the map distribution server 11 as in the previous example. This enables specifying the house with higher accuracy when plural houses exist at the same block number. In the present example, the browse means 5 is incorporated in the user terminal 1. Therefore, an email indicating the completion of estimation and the like is transmitted from the data transmission means 37 to the user terminal 1 and, thereafter, customer authentication is performed with the same method as in the second example and the installation support information is transmitted to the customer. While there has been described the example employing the portable terminal 51 and the user terminal 1, these functions may be integrated in a portable terminal equipped with a position detection means, a customer information input means and a browse means.

### (Fourth Example)

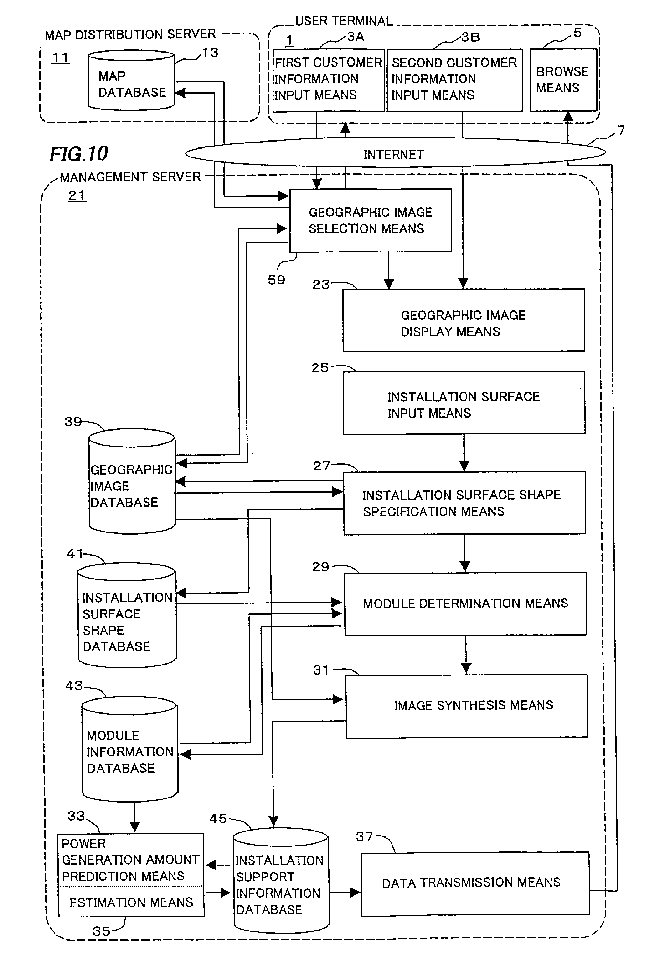

Fig. 10 is a block diagram of a support system for installing a photovoltaic power generator according to a fourth example, wherein arrows represent data flows. The present example is different from the first example in that the management server 21 includes a geographic image selection means 59 and the user terminal 1 includes a first customer information input means 3A and a second customer information input means 3B.

The first customer information input means 3A functions similarly to the customer information input means 3 in the first example and receives inputs about customer information such as customer's addresses. The input customer information is transmitted to the geographic image selection means 59 in the management server 21 through the Internet 7. The geographic image selection means 59 transmits the customer's address included in the customer information to the map distribution server 11. The map distribution server 11 makes a comparison between the customer's address and a map in the map database 13, calculates a coordinate in agreement with the customer's address and transmits the coordinate to the geographic image selection means 59. The geographic image selection means 59 extracts a geographic image with a low resolution (namely, with a wide range) about the received coordinate, from the geographic image database 39, and sends the geographic image to the user terminal 1 through the Internet 7. The browse means 5 displays the geographic image and the customer clicks on his/her house in the displayed geographic image by using the second customer information input means 3B. The accurate coordinate of the customer's house which has been specified by clicking is transmitted to the geographic image display means 23 in the management server 21 through the Internet 7. The geographic image display means 23 receives the same geographic image as that transmitted to the customer from the geographic image selection means 59 and displays this geographic image on the display connected to the management server 21 while superimposing, thereon, a mark indicative of the coordinate position of the customer's house specified by the customer. The subsequent process is similar to that described in "3. Specification of Roof of Customer's House" in the first example. With the present example, the customer specifies the position of his/her own house and, therefore, it is possible to specify the customer's house with higher accuracy, for example, when plural houses exist at the same address.

### (Concrete Applications of First to Fourth Examples)

Hereinafter, there will be described concrete applications of the first to fourth examples.

The user terminal and the portable terminal in the first to fourth examples are operated by a customer or a salesperson.

For example, with the third example, a salesperson can input customer information at a visited customer's house to associate the position of an image of the customer's house with the GPS coordinate and can transmit the position specifying the house to the server from a portable terminal such as a portable phone at the visited customer's house.

Further, by registering an email address of a portable phone in the customer information, it is possible to make a notification of information required for accessing the supporting information, by an email.

Further, it is preferable that three-dimensional roof shape data is integrally managed in the server. For example, it is preferable that, in updating aerial photographs, comparisons of roof shapes are made and data in agreement with the image before the updating is continuously stored in the server while data which is not in agreement therewith is erased since the house has been vanished due to reconstruction or the like.

Further, it is possible to manage the timings of demands of remodeling and reconstruction by using the information about image updating, in association with marketing of installation supporting for photovoltaic power generators.

While the present examples have been described with respect to installation support systems and methods used before installation of a photovoltaic power generator, it goes without saying that these examples enable customers who already possess photovoltaic power generators installed on their houses to grasp the installation state. For example, as follow-up after contract and installation, it is possible to link the installation support system to information about the power generation amounts of photovoltaic power generators installed on customer's houses through a network to automatically monitor the outputs of the customer's devices and compare the outputs with the values from the power generation amount prediction means according to the present application. Also, it is possible to combine the installation support system with weather data and provide a service system capable of automatically detecting significant reduction of the output inconsistent with the weather condition and rapidly addressing to such reduction.

Further, a salesperson can carry a portable information terminal equipped with the internet as medium means for inputting and outputting information according to the present invention to enable performing diagnostics about installation of photovoltaic power generators during site-visit sales, thereby further facilitating motivation of customers for installation.

In this specification, a term "means" can be rephrased as "section" or "part".

The invention thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A support system for installing a photovoltaic power generator with photovoltaic modules comprising:
calculation means for calculating an installation area of the modules on the basis of geographic information.

2. A support system for installing a photovoltaic power generator with photovoltaic modules comprising:
specification means for specifying a state of the modules' installation on the basis of geographic information; and
estimation means for estimating installation cost of the generator from the state specified by the specification means.

3. A support system for installing a photovoltaic power generator with photovoltaic modules comprising:
a geographic image database storing geographic images and coordinates;
installation site input means for receiving an input about an installation site of the modules;
geographic image display means for displaying a geographic image, including the input installation site, on display means by reading the geographic image from the geographic image database on the basis of position information of the input installation site;
installation surface input means for receiving inputs for specifying an installation surface of the modules, on the displayed geographic image;
installation surface shape specification means for specifying the installation surface shape by extracting coordinates of the installation surface from the geographic image database;
module determination means for determining a type and layout of the modules suitable for the installation surface shape; and
estimation means for reading prices of the modules used in the layout, from a price database storing prices of the modules, and calculating an estimated price of an installation cost of the generator.

4. A support system for installing a photovoltaic power generator with photovoltaic modules comprising:
a geographic image database storing geographic images and coordinates;
installation site input means for receiving an input about an installation site of the modules;
geographic image display means for displaying a geographic image, including the input installation site, on display means by reading the geographic image from the geographic image database on the basis of position information of the input installation site;
installation surface input means for receiving inputs for specifying an installation surface of the modules, on the displayed geographic image;
installation surface shape specification means for specifying an installation surface shape by extracting coordinates of the installation surface from the geographic image database;
installation surface shape input means for receiving an input about the installation surface shape;
module determination means for determining a type and layout of the modules suitable for the installation surface shape; and
estimation means for reading prices of the modules used in the layout, from a price database storing prices of the modules, and calculating an estimated price of an installation cost of the generator.

5. The system according to claims 3 or 4, further comprising:
a placement pattern database storing plural placement patterns of the modules, wherein
the module determination means makes comparison between the respective placement patterns in the placement pattern database and the specified installation surface shape and selects a placement pattern suitable for the installation surface shape, thereby determining the layout.

6. The system according to claims 3 or 4, further comprising:
a module information database storing shapes of the modules , wherein
the module determination means calculates the greatest area capable of mounting the modules thereon from the installation surface shape and determines a type and layout of the modules from the area and the shapes of the modules read from the database.

7. The system according to any one of claims 1 to 4, further comprising:
a module information database storing specifications about power generation performance of the modules;
a solar information database storing positions of the sun and solar irradiation in association with dates and hours and latitudes and longitudes; and
power generation amount prediction means for calculating a prospective power generation amount from the specifications of the modules, the positions of the sun, the solar irradiation and the installation surface shape.

8. The system according to claims 3 or 4, further comprising:
image synthesis means for superimposing the layout on a geographic image at a proper position or in an installation surface shape to create a synthesized image.

9. The system according to any one of claims 1 to 4 and 8, further comprising:
an installation support information database storing installation support information consisting of at least one of the installation cost, the prospective power generation amount and the synthesized image;
data transmission means for transmitting, to a customer, the installation support information stored in the installation support information database; and
browse means which enables browsing of data.

10. A support program for installing a photovoltaic power generator with photovoltaic modules which allows a computer to function as:
a geographic image database storing geographic images and coordinates;
installation site input means for receiving an input about an installation site of the modules;
geographic image display means for displaying a geographic image, including the input installation site, on display means by reading the geographic image from the geographic image database on the basis of position information of the input installation site;
installation surface input means for receiving inputs for specifying an installation surface of the modules, on the displayed geographic image;
installation surface shape specification means for specifying an installation surface shape by extracting the coordinates of installation surface from the geographic image database;
module determination means for determining a type and layout of the modules suitable for the installation surface shape; and
estimation means for reading prices of the modules used in the layout, from a price database storing prices of the modules, and calculating an estimated price of an installation cost of the generator.

11. A support program for installing a photovoltaic power generator with photovoltaic modules which allows a computer to function as:
a geographic image database storing geographic images and coordinates;
installation site input means for receiving an input about an installation site of the modules;
geographic image display means for displaying a geographic image, including the input installation site, on display means by reading the geographic image from the geographic image database on the basis of position information of the input installation site;
installation surface input means for receiving inputs for specifying an installation surface of the modules, on the displayed geographic image;
installation surface shape specification means for specifying an installation surface shape by extracting the coordinates of installation surface from the geographic image database;
installation surface shape input means for receiving an input about the installation surface shape;
module determination means for determining a type and layout of the modules suitable for the installation surface shape; and
estimation means for reading prices of the modules used in the layout, from a price database storing prices of the modules, and calculating an estimated price of an installation cost of the generator.
